# EUROPÄISCHE PATENTSCHRIFT

(11) **EP 1 076 457 B1**
(45) Veröffentlichungstag und Bekanntmachung des Hinweises auf die Patenterteilung: **15.11.2006**
(21) Anmeldenummer: 00115641.3
(22) Anmeldetag: 20.07.2000
(51) Int. Cl.: H04N 7/20, H04H 1/00

(54) **Satellitenempfangsanlage mit Zuschaltgerät**
Satellite reception equipment with switchbox
Installation de réception de satellite avec boîte commutateur

(30) Priorität: 12.08.1999 DE 29914051 U
(43) Veröffentlichungstag der Anmeldung: 14.02.2001
(73) Patentinhaber: Kathrein Werke KG, 83022 Rosenheim (DE)
(72) Erfinder: Exler, Ralf, 83059 Kolbermoor (DE); Linke, Christian, 83404 Ainring (DE); Haslböck, Albert, 83088 Kiefersfelden (DE); Stadler, Gerhard, 83064 Raubling (DE)
(74) Vertreter: Flach, Dieter Rolf Paul

(56) Entgegenhaltungen:
- DE-A- 19 728 623
- DE-U- 29 908 092
- SCHMEDT K ET AL: "KASKADIER-FAHIGER MULTISWITCH" , RADIO FERNSEHEN ELEKTRONIK,DE,VEB VERLAG TECHNIK. BERLIN, VOL. 43, NR. 3, PAGE(S) 22-23 XP000478260 ISSN: 1436-1574 * das ganze Dokument *

## Beschreibung

Die Erfindung betrifft eine Satellitenempfangsanlage nach dem Oberbegriff des Anspruches 1.

Die über einen Satelliten ausgestrahlten Fernseh-Rundfunkprogramme werden mittels horizontaler oder vertikaler Polarisation übertragen. Da zunehmend von mehr Satelliten mehr Programme ausgestrahlt werden, wird dabei auch das zu übertragende Frequenzspektrum zunehmend größer. Von daher umfasst ein sogenannter Quatro-Konverter üblicherweise vier Ausgänge, an denen das horizontale untere Band, das vertikale untere Band, das horizontale höhere Band und das vertikale höhere Band empfangen werden können.

An einem derartigen mit vier festgeschalteten Ausgängen versehenen Quatro-Konverter wird üblicherweise eine Umschaltmatrix oder eine Umschaltmatrixkaskade mit mehreren Teilnehmerausgängen angeschlossen. Jeder Teilnehmer kann darüber zwischen einem der vier vorstehend genannten Bandbereiche wählen und umschalten.

Die Umschaltung erfolgt dabei in der Regel in Form einer Umschaltung von 13 Volt auf 18 Volt (13 Volt üblicherweise zum Empfang der vertikalen und 18 Volt beispielsweise zum Empfang der horizontalen Polarisation), wobei durch eine zusätzliche Umschaltung eines Tonsignals von 0 kHz auf z.B. 22 kHz eine Umschaltung jeweils vom unteren auf das obere Frequenzband vorgenommen werden kann.

Ein derartiger Quatro-Konverter und eine nachgeordnete Umschaltmatrix, zumindest eine erste von mehreren nachgeschalteten Umschaltmatrix-Schaltungen, sind in der Regel räumlich getrennt voneinander angeordnet. Um einen ordnungsgemäßen Betrieb für die anzuschließenden Teilnehmer zu gewährleisten, muss jeweils den einzelnen Eingängen der Umschaltmatrix ein ganz bestimmter Ausgang des Quatro-Konverters zugeordnet werden. Dies erfordert stets ein Durchmessen der einzelnen Leitungen, um eine schaltungstechnisch richtige elektrische Zuordnung und Verbindung vorzunehmen.

Eine Abzweigeinrichtung für eine Satellitenempfangsanlage ist grundsätzlich auch aus der DE 197 28 623 A1 bekannt geworden. Die Abzweigeinrichtung ist so aufgebaut, dass beispielsweise über einen angeschlossenen LNC die über einen ersten Satellit (beispielsweise Astra) ausgestrahlten Programme und über einen zweiten anschließbaren LNC die von einem zweiten Satellit (beispielsweise Eutelsat) ausgestrahlten Programme empfangen werden können. Die Abzweigeinrichtung umfasst dabei interne Satellitenverstärkerstufen und ausgangsseitig eine Umschalt-Matrix mit beispielsweise acht Ausgängen.

Da jeder der beiden LNC-Ausgänge zwei Ausgangsklemmen aufweist, um zum einen das horizontal polarisierte und zum anderen das vertikal polarisierte Satellitensignal empfangen zu können, muss den Ausgangsklemmen dieser beiden LNC jeweils eine geeignete Versorgungsspannung zugeführt werden. Dies bedeutet z.B., dass der jeweiligen Ausgangsklemme eine Spannung von +12 Volt bis +15,5 Volt und der jeweiligen anderen Ausgangsklemme eine Spannung von etwa +16,5 Volt bis + 19 Volt zugeführt werden muss.

Diese Vorveröffentlichung befasst sich dabei mit der Problemstellung, dass auf dem Markt unterschiedliche LNC bekannt geworden sind, die mit unterschiedlichen Steuerspannungen arbeiten, beispielsweise mit einer Umschaltspannung von + 12 Volt ±5 % Toleranz oder mit einer Umschaltspannung von +14 Volt bzw. + 18 Volt.

Um hier eine Anpassung an die unterschiedlichen auf dem Markt erhältlichen LNC vornehmen zu können, ist ein manueller Umschalter vorgesehen. Hierdurch kann eine Spannungsumschaltung realisiert werden, so dass ein richtiger Betrieb jeweils in Abhängigkeit der auf dem Markt erhältlichen Komponenten möglich ist.

Ein grundsätzlich kaskadierfähiger sogenannter Multiswitch ist auch aus der Vorveröffentlichung "Schmedt K et al: "Kaskadier-fähiger Multiswitch", Radio Fernsehen Elektronik, DE, VEB Verlag Technik, Berlin, Vol. 43, Nr. 3, Page(s) 22-23 XP000478260 ISSN: 1436-1574)" als bekannt zu entnehmen. Hierbei handelt es sich jedoch um eine übliche, zuschaltbare Umschalt-Matrix, die nur im Zusammenhang mit einem entsprechenden LNC richtig zusammenarbeiten kann, an dessen Ausgängen jeweils die unterschiedlichen Empfangssignale der verschiedenen zu empfangenen Empfangsebenen (vertikal oder horizontal polarisierte Signale eines oberen oder unteren Frequenzbandes oder zweier verschiedener Satelliten etc.) eindeutig anstehen.

Aufgabe der vorliegenden Erfindung ist es, eine Verbesserung dahingehend zu schaffen, dass eine nach dem Stand der Technik bekannte Konverterschaltung, bei der zumindest vier Teilnehmer anschließbar sind und diese Teilnehmer jeweils individuell an dem ihnen zugeordneten Ausgang einstellbar horizontal oder vertikal polarisierte Signale eines ersten oder zweiten Frequenzbandes empfangen können, zu einer Empfangsanlage unter verwendung einer oder mehrer Umschaltmatrix - Schaltungen auszubauen. Bevorzugt ist es ferner eine Aufgabe der vorliegenden Erfindung, eine Verbesserung dahingehend zu schaffen, dass eine schaltungstechnisch richtige Zuordnung der Eingänge einer Umschaltmatrix mit den Ausgängen eines sogenannten Quatro-Konverters erleichtert werden kann.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die Erfindung geht von einem Quatro-Konverter aus, wie er grundsätzlich aus der DE 299 08 092 A1 bekannt ist. Es handelt sich dabei um einen Quatro-Konverter, an welchem beispielsweise direkt ein bis vier Teilnehmer angeschlossen werden können, wobei jeder Teilnehmer durch Umschaltung von einer ersten auf eine zweite Umschaltspannung (beispielsweise von 13 Volt auf 18 Volt) und durch Umschaltung zwischen einem Tonsignal von 0 kHz und 22 kHz eine Umschaltung jeweils zwischen dem unteren und dem oberen Frequenzband individuell (bzw. unabhängig von einem weiteren Teilnehmer) vornehmen kann, und zwar einmal bezüglich der horizontalen und zum anderen bezüglich der vertikal empfangenen Polarisation.

Erfindungsgemäß ist nunmehr vorgesehen, dass unter Verwendung eines Zuschaltgerätes, welches einer Umschaltmatrix vor- oder in der Regel nachgeschaltet wird, jeweils eine bestimmte Schaltspannung und ein bestimmtes Tonsignal vorgeprägt werden, und zwar derart, dass unabhängig von der Verkabelung zwischen Quatro-Konverter und der nachfolgenden Umschaltmatrix (ggf. einer ersten von mehreren Umschaltmatrix-Schaltungen) in einer bestimmten Reihenfolge ein unteres oder oberes Frequenzband zum Empfang einer horizontalen oder vertikalen Polarisation zugeordnet wird. Damit fällt jegliches nach dem Stand der Technik erforderliches Durchmessen der Leitungen weg, da die Kabelverlegung zwischen Quatro-Konverter und Umschaltmatrix insoweit bedeutungslos ist.

In einer besonders bevorzugten Ausführungsform der Erfindung wird ein entsprechendes Zuschaltgerät an den Ausgängen der Umschaltmatrix, im Falle mehrerer kaskadierter Umschaltmatrix-Schaltungen an den Ausgängen der letzten Umschaltmatrix, zugeschaltet.

Als besonders günstig hat sich erwiesen, wenn es sich bei dem an dem Ausgang der Umschaltmatrix zuschaltbaren Zusatzgerät um ein konfigurierbares Netzteil handelt, welches gleichzeitig zur Stromversorgung der Umschaltmatrix-Schaltungen und des Quatro-Konverters dient und dabei gleichzeitig die unteren und oberen Frequenzbänder für die horizontalen und vertikalen Polarisationen festlegt.

In einer bevorzugten Ausführungsform der Erfindung sind die Eingänge des am Ende zugeschalteten Zuschaltgerätes hochfrequenzwirksam abgeschlossen, insbesondere mit einer Impedanz von 75 Ω. Dadurch ist ein separater Abschluss der Matrixschaltung nicht mehr notwendig. Mit anderen Worten muss nur noch eine Art einer Schaltmatrix verwendet werden, da zwischen einer mit einer weiteren Schaltmatrix kaskadierbaren Schaltmatrix und einer End-Schaltmatrix nicht mehr unterschieden werden muss.

Bei dem erläuterten Ausführungsbeispiel der Erfindung zeigen:
- Figur 1 :: ein schematisches Schaltdiagramm eines Quatro-Konverters; und
- Figur 2 :: ein Schaltdiagramm der erfindungsgemäßen Komponente für die Satellitenempfangsanlage unter Verwendung des in Figur 1 wiedergegebenen Quatro-Konverters.

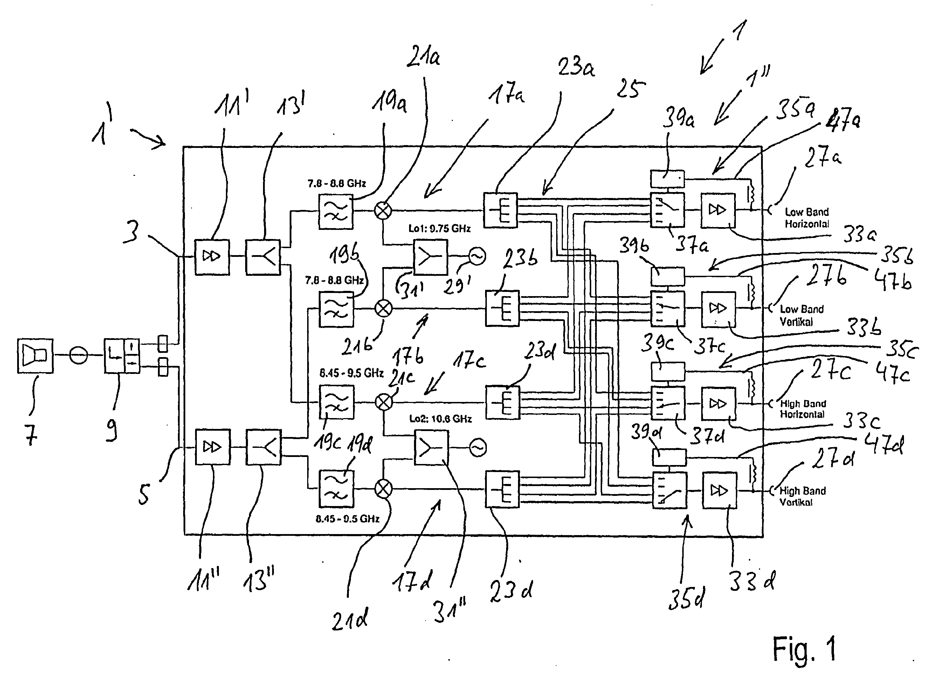

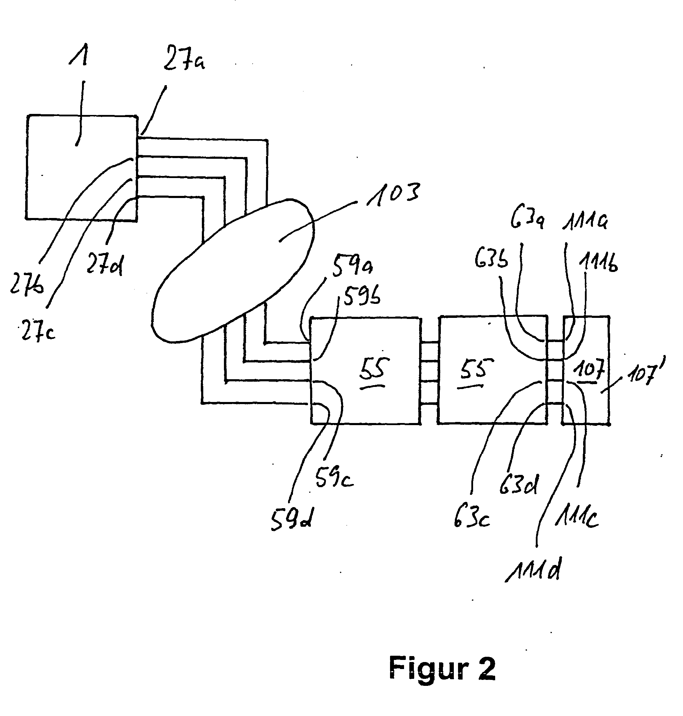

Bevor auf den weiteren Aufbau der Schaltungsanordnung gemäß Figur 2 eingegangen wird, wird zunächst der in der Figur 2 verwendete Quatro-Konverter 1 unter Bezugnahme auf Figur 1 näher erläutert.

Der in Figur 1 wiedergegebene Konverter 1 ist grundsätzlich aus der DE 299 08 092 bekannt und weist zwei Eingangsanschlüsse 3 und 5 auf.

Über ein in Figur 1 angedeutetes Horn 7 und eine nachgeordnete Polarisationsweiche 9 können die horizontal und vertikal empfangenen elektromagnetischen Polarisationen über die beiden Ausgänge der Polarisationsweiche 9 den beiden Eingängen 3 und 5 der Konverterschaltung 1 zugeführt werden.

Jedem der Eingangsanschlüsse 3 und 5 ist eine erste Verstärkerschaltung 11' bzw. 11'', und jeweils eine in der Reihe dazu geschaltete Frequenzweiche 13' bzw. 13'' nachgeordnet.

Über die erste Frequenzweiche 13' erfolgt beispielsweise eine Frequenzaufteilung in ein unteres Frequenzband von 10,7 GHz bis 11,7 GHz und ein oberes Frequenzband von 11,7 GHz bis 12,75 GHz.

Entsprechend ist der zweite Eingangszweig mit einer Verstärkerschaltung 11'' und einer nachgeordneten Frequenzweiche 13'' aufgebaut, worüber die mittels der vertikalen Polarisationen empfangenen Frequenzen in ein entsprechendes oberes und unteres Frequenzband aufgeteilt werden.

Es entstehen dadurch vier Empfangsebenen für ein unteres horizontales, ein unteres vertikales, ein oberes horizontales und ein oberes vertikales Frequenzband. Nachfolgend wird auch dann beispielsweise von vier Empfangsebenen gesprochen, wenn anstelle der beiden erwähnten oberen Frequenzbänder beispielsweise zwei Frequenzbänder anstehen, die über die vertikale und horizontale Polarisation von einem zweiten Satelliten empfangen werden.

Jeder der den vier Empfangsebenen zugeordneten Zweige 17a bis 17d umfasst jeweils in Reihe eine Filterschaltung 19a bis 19d sowie eine Mischstufe 21a bis 21d und eine nachfolgende Verzweigerschaltung, wobei jede Verzweigerschaltung 23a bis 23d so aufgebaut ist, dass das an dem einzigen Eingang anstehende Frequenzspektrum über jeweils vier Ausgangsleitungen 25 letztlich den vier Ausgängen 27a bis 27 d zuführbar ist.

Die beiden Mischstufen 21a und 21b für das horizontale wie vertikale untere Frequenzband werden jeweils über einen Lokaloszillator 29' bzw. 29" und eine nachfolgende Verzweigungsschaltung 31', 31'' angesteuert, und zwar die Mischstufen 21a und 21b beispielsweise mittels einer Lokaloszillatorfrequenz von 9,75 GHz.

Für die beiden oberen Frequenzbänder in der dritten und vierten Ebene erfolgt die Ansteuerung der Mischstufen 21c und 21d über einen oberen Lokaloszillator 29'' und die nachfolgende Verzweigungsschaltung 31".

Aus dem erläuterten Aufbau ist auch ersichtlich, dass der Quatro-Konverter 1 zweigegliedert ist und eine Konverterschaltung 1' aufweist, welcher einer vier Eingänge und vier Ausgänge aufweisenden Verteiler- oder Matrixschaltung 1" nachgeordnet ist.

Diese Matrixschaltung 1'' umfasst neben den erwähnten vier Verzweigungsschaltungen 23a bis 23d jeweils eine dem zugehörigen Konverter-Ausgang 27a bis 27d jeweils vorgeordnete weitere Verstärkerstufe 33a bis 33d, wobei jede dieser vier Verstärkerstufen 33a bis 33d eine Bandbereichsumschalt-Logik 35a bis 35d mit einer entsprechenden Umschalteinrichtung 37a bis 37d und einer jeweils zugeordnete Umschaltlogik 39a bis 39d umfasst, die über eine Verzweigungsleitung 41a bis 41d mit dem jeweiligen Konverter-ausgang 47a bis 47d in Verbindung steht. Diese Logikschaltungen sind unabhängig voneinander aufgebaut.

Jede der Bandbereichsumschaltung 35a bis 35d, d.h. jede der Umschalteinrichtungen 37a bis 37d weist vier Eingänge auf, von denen jeder der vier Eingänge mit jeweils einem der Ausgänge der vier Verzweigerschaltungen 23a bis 23d in Verbindung stehen.

Mit einem derartigen Quatro-Konverter können beispielsweise problemlos ein, zwei, drei oder vier direkt zuschaltbare Teilnehmer wahlweise Programme auf allen vier Empfangsebenen empfangen.

Durch Umschaltung von 13 Volt auf 18 Volt bzw. von 0 kHz auf 22 kHz eines Tonträgersignales kann beispielsweise ein am Ausgang 27a angeschlossener erster Teilnehmer die in der nachfolgenden Tabelle in Spalte 2 wiedergegebenen Frequenzbandbereiche der insgesamt vier Empfangsebenen empfangen.

| **Steuersignal** | **Auswertung 1xSat** | **Auswertung 2xSat** |
|---|---|---|
| 13V/0kHz | Vertikal/low | Vertikal/Pos1 |
| 13V/22kHz | Vertikal/high | Vertikal/Pos2 |
| 18V/0KHz | Horizontal/low | Horizontal/Pos1 |
| 18V/22kHz | Horizontal/high | Horizontal/Pos2 |

Sollte nicht eine Aufspaltung in ein sogenanntes oberes und unteres Band erfolgen, sondern werden beispielsweise die vertikalen und horizontalen Polarisationen von zwei unterschiedlichen Satelliten eingangsseitig empfangen, so kann eine Aufspaltung entsprechend der vertikalen und horizontalen Polarisation der ersten Satellitenposition (Pos. 1) und der zweiten Satellitenposition (Pos. 2) vorgenommen werden, wie dies in der dritten Spalte der vorstehenden Tabelle wiedergegeben ist.

Ebenso können die an den weiteren Anschlüssen 47b bis 47d angeschlossenen Teilnehmer jeweils unabhängig voneinander die gewünschten Programme empfangen.

Ein Quatro-Konverter entsprechend dem erläuterten Aufbau wird nunmehr bei der Schaltungsanordnung gemäß Figur 2 eingesetzt, wobei die vier Ausgänge 27a bis 27d über vier Verbindungsleitungen 101, d.h. vier in der Regel koaxiale Verbindungsleitungen 101a bis 101d mit den entsprechenden vier Eingängen 59a bis 59d einer nachgeschalteten Umschaltmatrix 55 verbunden werden. Mit Bezugszeichen 103 ist angedeutet, dass es unbedeutend ist, welcher der vier Ausgänge 27a bis 27d des Quatro-Konverters 1 mit welchem der Eingänge 59a bis 59d der nachfolgenden ersten Umschaltmatrix 55 verbunden wird. Dazu ist hinter der letzten Umschaltmatrix 55 (in Figur 2 sind zwei Umschaltmatrix-Schaltungen 55 in kaskadierter Form vorgesehen) ein Zuschaltgerät 107 vorgesehen, welches im gezeigten Ausführungsbeispiel als konfigurierbares Netzteil 107' ausgebildet ist.

Die vier Schaltungsausgänge 63a bis 63d der letzten Umschaltmatrix 55 sind dabei mit den vier Anschlüssen 111a bis 111d des Zuschaltgerätes 107, d. h. im gezeigten Ausführungsbeispiel des konfigurierbaren Netzteils 107' verbunden.

Das Zuschaltgerät 107 ist dabei so konfiguriert, dass jedem der vier Anschlüsse 111a bis 111d eine bestimmte Umschaltspannung (beispielsweise 13 Volt oder 18 Volt) bzw. eine bestimmte Schaltfrequenz (0 kHz oder beispielsweise 22 kHz) fest zugeordnet ist, die über die eine oder die mehreren kaskadierten Umschaltmatrix-Schaltungen 55 letztlich an den Eingängen 59a bis 59d der ersten Umschaltmatrix ansteht. Dies impliziert eine Schaltungsanordnung vergleichbar jener, als ob an den Ausgängen 27a bis 27d des Quatro-Konverters vier unabhängige Teilnehmer direkt angeschlossen wären, wobei jeder der Teilnehmer einen unterschiedlichen Schaltzustand repräsentiert.

In der nachfolgenden Tabelle ist wiedergegeben, dass die an den Anschlüssen 111a bis 111d anstehenden vorgeprägten Schaltzustände letztlich an den Ausgängen 27a bis 27d des Quatro-Konverters 1 anliegen und dabei die bereits in der oben genannten Tabelle wiedergegebenen Schaltzustände im Quatro-Konverter auslösen.

| **Ausgang Zuschaltgerät** | **Ausgang Quatro-Konverter** | **Steuersignal** | **Auswertung 1xSat** | **Auswertung 2xSat** |
|---|---|---|---|---|
| 111a | 27a | 13V/OkHz | V/low | V/Pos1 |
| 111b | 27b | 13V/22kHz | V/high | V/Pos2 |
| 111c | 27c | 18V/OKHz | H/low | H/Pos1 |
| 111d | 27d | 18V/22kHz | H/high | H/Pos2 |

Anstelle des hinter einer letzten Umschaltmatrix zuschaltbaren Zuschaltgerätes 107 insbesondere in Form eines konfigurierbaren Netzteils kann in Abweichung dazu auch zumindest eine der Umschaltmatrix-Schaltungen 55 mit einem integrierten Zuschalt-Baustein versehen sein, worüber die vier Schaltzustände fest vorgegeben werden und darüber den Quatro-Konverter in die gewünschte Konfiguration umschalten.

Abweichend dazu kann ein entsprechendes Zuschaltgerät auch an anderer Stelle vorgesehen sein, beispielsweise vor der ersten Umschaltmatrix, d.h. also zwischen Quatro-Konverter 1 und der ersten Umschaltmatrix 55 oder beispielsweise zwischen mehreren kaskadierten Umschaltmatrix-Schaltungen.

Ggf. kann das Zuschaltgerät aber auch in einer nachgeschalteten Matrix integriert sein.

Die erläuterte Erfindung ermöglicht also, dass ein Quatro-Konverter beispielsweise über vier Leitungen mit einer oder einer von mehreren Umschaltmatrix-Schaltungen verbunden wird, wobei es völlig unerheblich ist, welcher Ausgang des Quatro-Konverters mit welchem Eingang der Umschaltmatrix verbunden wird, da die entsprechend richtige Zuordnung der einzelnen Empfangsbereiche für vertikale und horizontale obere oder untere Frequenzbänder oder bezüglich Programmen von zwei unterschiedlichen Satelliten automatisch durch das konfigurierbare Zuschaltgerät 107 erfolgen kann.

Das Ausführungsbeispiel ist für den Fall erläutert worden, dass das Zuschaltgerät vier unterschiedliche Schaltzustände fest vorgibt, die zum Empfang vier unterschiedlicher Satellitenempfangsebenen dienen (also zum Empfang von vertikalen und horizontalen Polarisationen, beispielsweise eines oberen oder unteren Frequenzbandes eines Satelliten oder eines ersten und eines zweiten Frequenzbandes eines ersten und eines zweiten Satelliten). In einer vereinfachten Ausführungsform müssen das Zuschaltgerät oder ggf. nur drei Empfangsebenen über drei Anschlüsse 63a bis 63c vorgegeben werden, wobei ggf. im Konverter 1 an dem Anschluss, an dem kein bestimmter Zustand, also keine bestimmte Satellitenempfangsebene durch das Zuschaltgerät vorgeprägt wird, per se, d.h. automatisch die vierte Bereichsebene zum Empfang der mit dem vierten Bereich ausgestrahlten Satellitenprogramme automatisch voreingestellt ist. Bevorzugt kann dies durch eine Voreinstellung von "0 Volt" und "0 kHz" bewirkt werden.

## Patentansprüche

1. Satellitenempfangsanlage mit folgenden Merkmalen
- mit einem schaltbaren Konverter (1)
- der schaltbare Konverter (1) umfasst zumindest vier Ausgänge (27a - 27d),
- an den zumindest vier Ausgängen (27a - 27d) ist jeweils ein Teilnehmer anschließbar,
- der schaltbare Konverter (1) ist so aufgebaut, dass jeder Teilnehmer durch wahlweise Einspeisung von einem von vier unterschiedlichen Umschaltsignalen in einen der vier Ausgänge (27a - 27d), an dem er angeschlossen ist, unabhängig von einem anderen Teilnehmer, der an einem anderen Ausgang (27a - 27d) angeschlossen ist, in Abhängigkeit des jeweiligen Umschaltsignales eine von vier Satellitenempfangsebenen und damit die hierüber ausgestrahlten Programme empfangen kann,
**gekennzeichnet durch** die folgenden weiteren Merkmale
- die zumindest vier Ausgänge (27a - 27d) des Konverters (1) sind mit den zumindest vier Eingängen (59a - 59d) einer nachgeschalteten Schaltmatrix (55) verbunden,
- ein Zuschaltgerät (107, 107') ist entweder an den vier Ausgängen (63a - 63d) der Schaltmatrix (55) oder zwischen den vier Ausgängen (27a - 27d) des Konverters (1) und den vier Eingängen (59a - 59d) der Schaltmatrix (55) Zuschaltbar,
- das Zuschaltgerät (107, 107') ist so konfiguriert, dass an jedem seiner vier Eingänge (111a - 111d) und damit an den vier Ausgängen (27a - 27d) des schaltbaren Konverters (1) unterschiedliche Umschaltsignale anliegen, wobei am ersten Ausgang (27a) des Konverters (1) die Signale zum Empfang einer ersten Satellitenempfangsebene, am zweiten Ausgang (27b) des Konverters (1) die Empfangssignale der zweiten Satellitenempfangsebene, am dritten Ausgang (27c) des Konverters (1) die Empfangssignale der dritten Satellitenempfangsebene und am vierten Ausgang (27d) des Konverters (1) die Empfangssignale der vierten Satellitenempfangsebene anstehen.

2. Satellitenempfangsanlage nach Anspruch 1, **dadurch gekennzeichnet, dass** zwischen den Ausgängen (27a - 27d) des Konverters (1) und den Eingängen der nachgeschalteten Umschaltmatrix (55) vier Verbindungsleitungen (101) vorgesehen sind, worüber jeweils ein Ausgang (27a - 27d) des Konverters (1) mit einem Eingang (59a - 59d) der Umschaltmatrix (55) verbunden ist.

3. Satellitenempfangsanlage nach Anspruch 1 oder 2, **dadurch gekennzeichnet, dass** lediglich eine Umschaltmatrix (55) vorgesehen ist, der das Zuschaltgerät (107, 107') nachgeschaltet ist.

4. Satellitenempfangsanlage nach einem der Ansprüche 1 oder 2, **dadurch gekennzeichnet, dass** das Zuschaltgerät (107, 107') am Ende von mehreren kaskadiert angeordneten Umschaltmatrix-Schaltungen (55) zugeschaltet ist.

5. Satellitenempfangsanlage nach Anspruch 1 oder 2, **dadurch gekennzeichnet, dass** das Zuschaltgerät (107) zwischen zwei in Reihe geschalteten Umschaltmatrix-Schaltungen (55) zwischengeschaltet ist.

6. Satellitenempfangsanlage nach einem der Ansprüche 1 bis 5, **dadurch gekennzeichnet, dass** das Zuschaltgerät (107, 107') mit seinen Eingängen (111a - 111d) an den Ausgängen (63a - 63d) der einzigen oder der letzten von mehreren kaskadierten Schaltmatrix-Schaltungen (55) zugeschaltet ist, und dass die Eingänge (111a - 111d) des Zuschaltgerätes (107, 107') hochfrequenzwirksam abgeschlossen sind.

7. Satellitenempfangsanlage nach Anspruch 6, **dadurch gekennzeichnet, dass** der hochfrequenzwirksame Abschluss eine Impedanz von vorzugsweise um 75 Ω aufweist.

8. Satellitenempfangsanlage nach einem der Ansprüche 1 bis 7, **dadurch gekennzeichnet, dass** das Zuschaltgerät (107) aus einem konfigurierbaren Netzteil (107') besteht.

9. Satellitenempfangsanlage nach einem der Ansprüche 1 bis 8, **dadurch gekennzeichnet, dass** jedem der vier Anschlüsse (111a - 111d) des Zuschaltgerätes (107, 107') eine bestimmte Umschaltspannung und eine bestimmte Schaltfrequenz als Umschaltsignal zugeordnet ist.

10. Satellitenempfangsanlage nach Anspruch 9, **dadurch gekennzeichnet, dass** das Zuschaltgerät (107, 107') so konfiguriert ist, dass an einem ersten Anschluss (111a) eine erste Schaltspannung und ein erstes Steuersignal (0 kHz bzw. 22 kHz) und an einem zweiten Anschluss (111b) eine erste Schaltspannung und ein zweites Steuersignal (22 kHz bzw. 0 kHz) und an einem dritten Anschluss (111c) eine zweite Schaltspannung und ein erstes Steuersignal (0 kHz bzw. 22 kHz) und an einem vierten Anschluss (111d) eine zweite Schaltspannung und ein zweites Steuersignal (22 kHz bzw. 0 kHz) anliegen.

## Claims

1. Satellite reception system having the following features
- having a switchable converter (1)
- the switchable converter (1) comprises at least four outputs (27a - 27d),
- one user can be connected to each of the at least four outputs (27a - 27d),
- the switchable converter (1) is so constructed that, by the feeding, as desired, of one of four different switching signals to the one of the four outputs (27a - 27d) to which he is connected, each user is able to receive, as a function of the particular switching signal, one of four satellite reception levels, and hence the programmes broadcast thereon, independently of another user who is connected to another output (27a - 27d),
**characterised by** the following further features
- the at least four outputs (27a - 27d) of the converter (1) are connected to the at least four inputs (59a - 59d) of a switching matrix connected downstream (55),
- an insertable device (107, 107') can be inserted either at the four outputs (63a - 63d) of the switching matrix (55) or between the four outputs (27a - 27d) of the converter (1) and the four inputs (59a - 59d) of the switching matrix (55),
- the insertable device (107, 107') is so configured that different switching signals are present at each of its four inputs (111a - 111d) and thus at the four outputs (27a - 27d) of the switchable converter (1), the signals for receiving a first satellite reception level being present at the first output (27a) of the converter (1), the signals for receiving the second satellite reception level being present at the second output (27b) of the converter (1), the signals for receiving the third satellite reception level being present at the third output (27c) of the converter (1), and the signals for receiving the fourth satellite reception level being present at the fourth output (27d) of the converter (1).

2. Satellite reception system according to claim 1, **characterised in that** four connecting lines (101) are provided between the outputs (27a - 27d) of the converter (1) and the inputs of the switching matrix (55) connected downstream, by which means one output (27a - 27d) of the converter (1) is connected in each case to one input (59a - 59d) of the switching matrix (55).

3. Satellite reception system according to claim 1 or 2, **characterised in that** only one switching matrix (55) is provided, downstream of which the insertable device (107, 107') is connected.

4. Satellite reception system according to either of claims 1 and 2, **characterised in that** the insertable device (107, 107') is inserted at the end of a plurality of switching matrix circuits (55) arranged in a cascade.

5. Satellite reception system according to claim 1 or 2, **characterised in that** the insertable device (107) is connected between two switching matrix circuits (55) connected in series.

6. Satellite reception system according to one of claims 1 to 5, **characterised in that** the insertable device (107, 107') is connected, by its inputs (111a - 111d), to the outputs (63a - 63d) of the single switching matrix circuit or of the final one of a plurality of cascaded switching matrix circuits (55), and **in that** the inputs (111a - 111d) of the insertable device (107, 107') are terminated to operate effectively at high frequency.

7. Satellite reception system according to claim 6, **characterised in that** the termination operating effectively at high frequency has an impedance of, preferably, around 75 Ω.

8. Satellite reception system according to one of claims 1 to 7, **characterised in that** the insertable device (107) comprises a configurable power supply (107').

9. Satellite reception system according to one of claims 1 to 8, **characterised in that** each of the four connections (111a - 111d) of the insertable device (107, 107') has assigned to it, as a switching signal, a given switching voltage and a given switching frequency.

10. Satellite reception system according to claim 9, **characterised in that** the insertable device (107, 107') is so configured that a first switching voltage and a first control signal (0 kHz or 22 kHz as the case may be) are present at a first connection. (111a), a first switching voltage and a second control signal (22 kHz or 0 kHz) are present at a second connection (111b), a second switching voltage and a first control signal (0 kHz or 22 kHz as the case may be) are present at a third connection (111c), and a second switching voltage and a second control signal (22 kHz or 0 kHz) are present at a fourth connection (111c).

## Revendications

1. Installation de réception satellite, présentant les éléments suivants :
- un convertisseur commutable (1),
- le convertisseur commutable (1) comprend au moins quatre sorties (27a - 27d),
- à chacune des quatre sorties au moins (27a - 27d) peut venir se brancher un abonné respectif,
- le convertisseur commutable (1) est conçu de telle sorte que chaque abonné, par injection sélective d'un parmi quatre signaux de commutation différents dans l'une des quatre sorties (27a - 27d) à laquelle il est branché, peut recevoir l'un parmi quatre plans de réception satellite et ainsi les programmes émis via ceux-ci, en fonction du signal de commutation respectif, indépendamment d'un autre abonné qui est branché à une autre sortie (27a - 27d),
**caractérisée par** les autres éléments suivants :
- les quatre sorties au moins (27a - 27d) du convertisseur (1) sont reliées aux quatre entrées au moins (59a - 59d) d'une matrice de commutation (55) agencée en aval,
- un appareil de mise en circuit (107 ; 107') est susceptible d'être mis en circuit soit aux quatre sorties (63a - 63d) de la matrice de commutation (55) soit entre les quatre sorties (27a - 27d) du convertisseur (1) et les quatre entrées (59a - 59d) de la matrice de commutation (55),
- l'appareil de mise en circuit (107, 107') est configuré de telle sorte que différents signaux de commutation s'appliquent à chacune de ses quatre entrées (111 a - 111d) et ainsi aux quatre sorties (27a - 27d) du convertisseur commutable (1), les signaux pour recevoir un premier plan de réception satellite étant appliqués à la première sortie (27a) du convertisseur, les signaux de réception du second plan de réception satellite étant appliqués à la seconde sortie (27b) du convertisseur (1), les signaux de réception du troisième plan de réception satellite étant appliqués à la troisième sortie (27c) du convertisseur (1), et les signaux de réception du quatrième plan de réception satellite étant appliqués à la quatrième sortie (27d) du convertisseur (1).

2. Installation de réception satellite selon la revendication 1, **caractérisée en ce qu'**il est prévu quatre lignes de connexion (101) entre les sorties (27a - 27d) du convertisseur (1) et les entrées de la matrice de commutation (55) agencée en aval, lignes par lesquelles une sortie respective (27a - 27d) du convertisseur (1) est connectée à une entrée (59a - 59d) de la matrice de commutation.

3. Installation de réception satellite selon la revendication 1 ou 2, **caractérisée en ce qu'**il est prévu une seule matrice de commutation (55) en aval de laquelle est agencé l'appareil de mise en circuit (107, 107').

4. Installation de réception satellite selon l'une des revendications 1 ou 2, **caractérisée en ce que** l'appareil de mise en circuit (107, 107') est mis en circuit à la fin de plusieurs circuits de matrice de commutation (55) agencés en cascade.

5. Installation de réception satellite selon la revendication 1 ou 2, **caractérisée en ce que** l'appareil de mise en circuit (107) est interposé entre deux circuits de matrice de commutation (55) branchés en série.

6. Installation de réception satellite selon l'une des revendications 1 à 5, **caractérisée en ce que** l'appareil de mise en circuit (107, 107') est branché par ses entrées (111a - 111d) aux sorties (63a - 63d) du seul circuit ou du dernier parmi plusieurs circuits de matrice de commutation (55) en cascade, et **en ce que** les entrées (111a - 111d) de l'appareil de mise en circuit (107, 107') sont fermées de manière efficace vis-à-vis des hautes fréquences.

7. Installation de réception satellite selon la revendication 6, **caractérisée en ce que** la fermeture efficace vis-à-vis des hautes fréquences présente une impédance de préférence d'environ 75 Ω.

8. Installation de réception satellite selon l'une des revendications 1 à 7, **caractérisée en ce que** l'appareil de mise en circuit (107) est constitué par un bloc d'alimentation (107') configurable.

9. Installation de réception satellite selon l'une des revendications 1 à 8, **caractérisée en ce qu'**à chacune des quatre bornes (111a - 111 d) de l'appareil de mise en circuit (107, 107') est associée une tension de commutation déterminée et une fréquence de commutation déterminée à titre de signal de commutation.

10. Installation de réception satellite selon la revendication 9, **caractérisée en ce que** l'appareil de mise en circuit (107, 107') est configuré de telle sorte qu'une première tension de commutation et un premier signal de commande (0 kHz ou 22 kHz) s'appliquent à une première borne (111a), qu'une première tension de commutation et un second signal de commande (22 kHz ou 0 kHz) s'appliquent à une seconde borne (111b), qu'une seconde tension de commutation et un premier signal de commande (0 kHz ou 22 kHz) s'appliquent à une troisième borne (111c), et qu'une seconde tension de commutation et un second signal de commande (22 kHz ou 0 kHz) s'appliquent à une quatrième borne (111d).
